# EUROPEAN PATENT SPECIFICATION

(11) **EP 3 968 217 B1**
(45) Date of publication and mention of the grant of the patent: **23.09.2026**
(21) Application number: 20830926.0
(22) Date of filing: 05.06.2020
(51) Int. Cl.: G06V 10/82, G06F 16/432, G06V 20/66

(54) **ARTICLE IDENTIFICATION METHOD AND DEVICE, AND COMPUTER READABLE STORAGE MEDIUM**
ARTIKELIDENTIFIKATIONSVERFAHREN UND -VORRICHTUNG UND COMPUTERLESBARES SPEICHERMEDIUM
PROCÉDÉ ET DISPOSITIF D'IDENTIFICATION D'ARTICLE ET SUPPORT DE STOCKAGE LISIBLE PAR ORDINATEUR

(30) Priority: 28.06.2019 CN 201910578481
(43) Date of publication of application: 16.03.2022
(73) Proprietor: Shenzhen Xhorse Electronics Co., Ltd, Shenzhen, Guangdong 518000 (CN)
(72) Inventor: XI, Yongfeng, Shenzhen, Guangdong 518000 (CN); HE, Yuan, Shenzhen, Guangdong 518000 (CN); HAO, Yijie, Shenzhen, Guangdong 518000 (CN); CAO, Guozhong, Shenzhen, Guangdong 518000 (CN); LI, Chenglong, Shenzhen, Guangdong 518000 (CN)
(74) Representative: Kancelaria Eupatent.pl Sp. z o.o.
(86) International application number: PCT/CN2020/094752
(87) International publication number: WO 2020/259257

(56) References cited:
- CN-A- 101 216 841
- CN-A- 104 867 148
- CN-A- 105 100 620
- CN-A- 107 730 524
- CN-A- 108 053 024
- CN-A- 110 472 480
- US-A1- 2014 267 404
- HOONLOR APIRAK ET AL: "UCap: A crowdsourcing application for the visually impaired and blind persons on Android smartphone", 2015 INTERNATIONAL COMPUTER SCIENCE AND ENGINEERING CONFERENCE (ICSEC), IEEE, 23 November 2015 (2015-11-23), pages 1 - 6, XP032861428, [retrieved on 20160208], DOI: 10.1109/ICSEC.2015.7401406
- ZHOU XIN ET AL: "Product Image Search with Deep Attribute Mining and Re-ranking", 27 November 2016, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 561 - 570, ISBN: 978-3-540-74549-5, XP047363545

## Description

### Cross-reference to Related Application

The present disclosure claims the priority to the Chinese patent application with the filing No. 2019105784817 filed on June 28, 2019 with the Chinese Patent Office, and entitled "Article Identification Method and Device, and Computer Readable Storage Medium".

### Technical Field

The present disclosure relates to the technical field of image processing, and in particular, provides an article identification method, an article identification device, and a computer readable storage medium.

### Background Art

In life, a specific sequence code is usually used as an identification code of an article for a user to identify the article. Exemplarily, a production sequence code obtained based on production information on an article may be taken as an identification code of the article, and a feature code obtained based on a specific feature of the article also may be taken as an identification code of the article, for example, a tooth profile code of a key may be taken as an identification code of an article.

In the above different types of identification codes, the production sequence code is usually marked on outer packaging of the article, which can serve a function of classifying the same articles into the same type, and distinguishing different articles; and the feature code may reflect the feature of an article, and generally will not be intuitively marked on the article or its packaging, and may play an important role in the field of copying and printing of articles.

In some possible scenarios, the production sequence code may be missing due to wearout (damage), and the feature identification code is difficult to obtain directly, then an article cannot be identified. Taking a tooth profile code for the key as an example, some methods of identifying the tooth profile code for the key generally utilize manual judgement or a professional system in a complex structure with complex operations, and an article identification process is complex, and highly difficult.

A publication "UCap: A Crowdsourcing Application for the Visually Impaired and Blind Persons on Android Smartphone" (by Hoonlor Apirak et al. in 2015 International Computer Science and Engineering Conference (ICSEC), IEEE) describes a camera-base mobile application that identifies the consumer product of a captured image using an annotated image database that is created using crowdsourcing paradigm.

A publication "Product Image Search with Deep Attribute Mining and Re-ranking" (by Xin Zhou et al. in SAT 2015 18th International Conference, Austin, TX, USA, September 24-27, 2015) explores deep learning with convolutional neural networks (CNN) to resolve query's classification, and proposes an approach for product image search.

### Summary

Objectives of the present disclosure lie in providing an article identification method, an article identification device, and a computer readable storage medium, which can simplify the article identification process, and reduce the article identification difficulty.

The invention is defined by the set of appended claims. The object of the invention is an article identification method, an article identification device and a computer readable storage medium as defined in the appended claims.

### Brief Description of Drawings

FIG. 1 is a schematic diagram of a hardware operation environment of an example terminal related to in a solution of an embodiment of the present disclosure;
FIG. 2 is a schematic flowchart of steps of an article identification method provided in Embodiment 1 of the present disclosure;
FIG. 3 is a schematic flowchart of sub-steps of the article identification method provided in Embodiment 1 of the present disclosure;
FIG. 4 is a schematic flowchart of sub-steps of the article identification method provided in Embodiment 1 of the present disclosure;
FIG. 5 is a schematic flowchart of sub-steps of the article identification method provided in Embodiment 1 of the present disclosure;
FIG. 6 is a diagram of a key structure provided in Embodiment 1 of the present disclosure;
FIG. 7 is a diagram of an example of an image acquisition frame provided in Embodiment 1 of the present disclosure;
FIG. 8 is a diagram of analysis elements of the image acquisition frame provided in Embodiment 1 of the present disclosure;
FIG. 9 is an exemplary diagram of a real-time imaged image of a tooth profile region being a calibration imaged image provided in Embodiment 1 of the present disclosure;
FIG. 10 is a schematic flowchart of sub-steps of the article identification method provided in Embodiment 1 of the present disclosure; and
FIG. 11 is a schematic flowchart of steps of the article identification method provided in Embodiment 2 of the present disclosure.

### Detailed Description of Embodiments

In order to make clearer the objectives, technical solutions, and technical effects of the present disclosure, the present disclosure is illustrated below in combination with accompanying drawings and embodiments. It should be understood that some embodiments described herein are merely used to explain the present disclosure but not to limit the present disclosure.

It should be noted that various features in the embodiments of the present disclosure may be combined with each other, without conflict, all of which fall within the scope of protection of the present disclosure. Additionally, while a division of functional modules is made in device diagrams, and a logical order is shown in the flowcharts, in some cases, steps shown or described may be performed in a different order than the division of modules in the device diagrams, or the order in the flowcharts.

Some article identification technologies rely on manpower or complex professional systems to perform, and the identification is highly difficult.

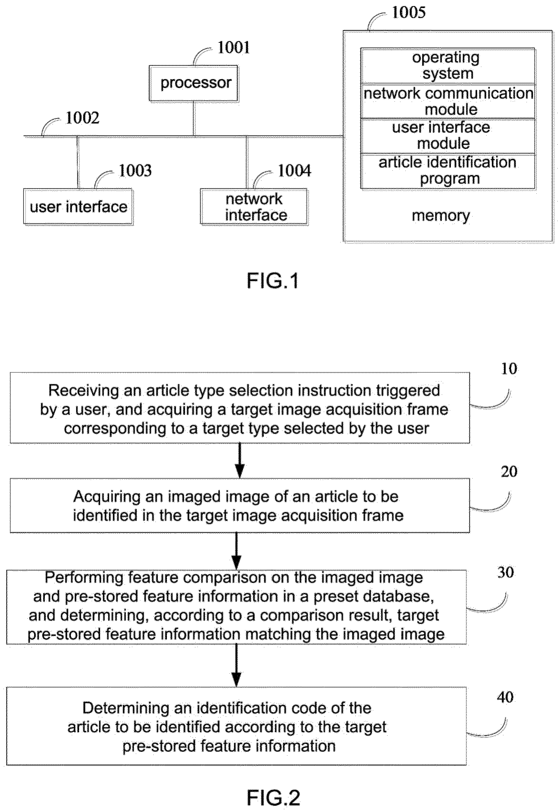

In order to solve the above technical problem, the present disclosure provides an article identification method. By acquiring an imaged image of an article to be identified through a target image acquisition frame matching the article to be identified, and determining an identification code of the article to be identified by comparing the imaged image and pre-stored feature information, an identification process of the article is simplified, and the difficulty of article identification is reduced. As shown in FIG. 1, FIG. 1 is a schematic structural diagram of a hardware operation environment of a terminal related to in a solution of an embodiment of the present disclosure.

In some possible embodiments, the terminal in the embodiment of the present disclosure may be a PC (Personal Computer), and also may be a movable terminal device having a display function such as a smart cellphone, a tablet computer, an E-book reader, an MP3 (Moving Picture Experts Group Audio Layer III) player, an MP4 (Moving Picture Experts Group Audio Layer IV) player, and a portable computer.

As shown in FIG. 1, the terminal may include: a processor 1001, for example, a CPU, a network interface 1004, a user interface 1003, a memory 1005, and a communication bus 1002.

In the above, in some possible embodiments, the communication bus 1002 may be configured to realize connection communication between these components.

In some possible embodiments, the user interface 1003 may include a display screen (Display), and an input unit such as a keyboard; and optionally, the user interface 1003 further may include a standard wired interface and a wireless interface.

In some possible embodiments, the network interface 1004 may include a standard wired interface and a wireless interface (such as a WI-FI interface).

In some possible embodiments, the memory 1005 may be a high-speed RAM memory, and also may be a stable memory (non-volatile memory), for example, a disk memory. The memory 1005 may also be a storage device independent of the foregoing processor 1001.

Optionally, in some possible embodiments, the terminal further may include a camera, an RF (Radio Frequency) circuit, a sensor, an audio circuit, a WiFi module, etc. In the above, the sensor may be, for example, an optical sensor, a motion sensor, and other sensors. Exemplarily, the optical sensor may include an ambient light sensor and a proximity sensor, wherein the ambient light sensor may adjust brightness of the display screen according to brightness of the ambient light, and the proximity sensor may turn off the display screen and/or backlight when the mobile terminal is moved near to the ear.

In the above, as one type of motion sensor, a gravitational acceleration sensor may detect the magnitude of acceleration in each direction (generally, three axes), may detect the magnitude and direction of the gravity when being stationary, and may be configured to identify application of mobile terminal posture (such as switching of horizontal screen and vertical screen, related game, magnetometer posture calibration), and a vibration-identification related function (such as pedometer, tap); certainly, the mobile terminal may be further configured with other sensors such as a gyroscope, a barometer, a hygrometer, a thermometer, and an infrared sensor, which are not described herein again.

A person skilled in the art could understand that the structure of the terminal shown in FIG. 1 is merely exemplary, and does not constitute limitation to the terminal, and the terminal in the embodiment of the present disclosure may further include more or less components than those shown in the drawings, or combine some components, or have different arrangement of components.

As shown in FIG. 1, a memory 1005 as a computer storage medium may include an operating system, a network communication module, a user interface module, and an article identification program.

In the terminal shown in FIG. 1, the network interface 1004 is mainly configured to be connected to a background server, and perform data communication with the background server; the user interface 1003 is mainly configured to be connected to a client (user terminal), and perform data communication with the client; and the processor 1001 may be configured to invoke an article identification program stored in the memory 1005, and perform the following operations:
receiving an article type selection instruction triggered by a user, and acquiring a target image acquisition frame corresponding to a target type selected by the user;
acquiring an imaged image of an article to be identified in the target image acquisition frame;
performing feature comparison on the imaged image and pre-stored feature information in a preset database, and determining, according to a comparison result, target pre-stored feature information matching the imaged image; and
determining an identification code of the article to be identified according to the target pre-stored feature information.

Optionally, in some possible embodiments, the processor 1001 may invoke the article identification program stored in the memory 1005, and further execute the following operations:
receiving an article identification instruction triggered by the user, and acquiring all pieces of pre-stored type information; and
displaying the pre-stored type information for the user to view.

Optionally, in some possible embodiments, the processor 1001 may invoke the article identification program stored in the memory 1005, and further execute the following operations:
the step of performing feature comparison on the imaged image and pre-stored feature information in a preset database, and determining, according to a comparison result, target pre-stored feature information matching the imaged image includes:
identifying imaging feature points in the imaged image;
acquiring imaging parameters of each imaging feature point, and obtaining an imaging parameter sequence of feature points based on various imaging parameters;
calculating a distance parameter between the imaging parameter sequence and each pre-stored specification parameter sequence, and determining a target pre-stored specification parameter sequence matching the imaged image based on each distance parameter; and
determining an identification code of the article to be identified according to the target pre-stored specification parameter sequence.

Optionally, in some possible embodiments, the processor 1001 may invoke the article identification program stored in the memory 1005, and further execute the following operations:
acquiring a plurality of article training images, and the user's article type labelling information on each article training image, as a training set of a depth learning network model; and
taking each article training image as an input of the depth learning network model, and corresponding article type labelling information as an output of the depth learning network model, and obtaining an article type identification depth learning model through training.

Optionally, in some possible embodiments, the processor 1001 may invoke the article identification program stored in the memory 1005, and further execute the following operations:
acquiring an article sample image;
inputting the article sample image into the article type identification depth learning model for processing, to obtain a type identification result of the article sample image; and
making addition for the pre-stored type information or the pre-stored feature information based on the type identification result.

Optionally, in some possible embodiments, the processor 1001 may invoke the article identification program stored in the memory 1005, and further execute the following operations:
acquiring, in the target image acquisition frame, a calibration imaged image of the article to be identified geometrically matching the target image acquisition frame;
the step of performing feature comparison on the imaged image and pre-stored feature information in a preset database, and determining, according to a comparison result, target pre-stored feature information matching the imaged image includes:
   performing feature comparison on the calibration imaged image and the pre-stored feature information in the preset database, and determining, according to a comparison result, target pre-stored feature information matching the calibration imaged image.

Optionally, in some possible embodiments, the processor 1001 may invoke the article identification program stored in the memory 1005, and further execute the following operations:
acquiring a real-time imaged image of the article to be identified in the target image acquisition frame;
comparing the real-time imaged image with the target image acquisition frame, and determining a real-time geometric relation between the real-time imaged image and the target image acquisition frame;
judging whether the real-time geometric relation satisfies a preset calibration condition, wherein
if yes, a current real-time imaged image is taken as the calibration imaged image; and
if not, real-time prompt information for adjusting a position of an image acquisition device is displayed, for the user to adjust the position of the image acquisition device based on the real-time prompt information.

Based on the above hardware structure, an embodiment of the article identification method of the present disclosure is proposed.

With reference to FIG. 2, FIG. 2 is a schematic flowchart of steps of an article identification method provided in Embodiment 1 of the present disclosure. The article identification method includes:
step 10, receiving an article type selection instruction triggered by a user, and acquiring a target image acquisition frame corresponding to a target type selected by the user.

Exemplarily, in the solution provided in the present disclosure, a terminal may determine an identification code of an article through an image of the article, so as to achieve the purpose of identifying the article, and a result of the article identification is to obtain the identification code of the article to be identified. In the above, the article to be identified may include a key to be identified, and the article identification code may include a key tooth profile code.

Hereinafter, the article identification method provided in the present disclosure is illustrated through an identification process of a tooth profile code of a key, wherein the tooth profile code of the key may refer to a sequence code configured to identify a key tooth profile outline, for example, the tooth profile code may be generated on the basis of a ratio of a height value to a depth value of a tooth position in the tooth profile part of the key; in this way, the terminal may obtain feature information on a tooth profile part of key according to a tooth profile code of a key, and realize copying of the key based on the tooth profile feature information.

It should be noted that in the technical solution provided in the present disclosure, the terminal as an execution subject may be a mobile terminal such as a cellphone and a tablet computer, and also may be a fixed terminal such as a personal computer; the terminal as an execution subject may be configured with an image acquisition device such as a camera, and an application program article identification APP based on the article identification method provided in the present disclosure is installed in the terminal, for the user to perform the article identification through the article identification APP.

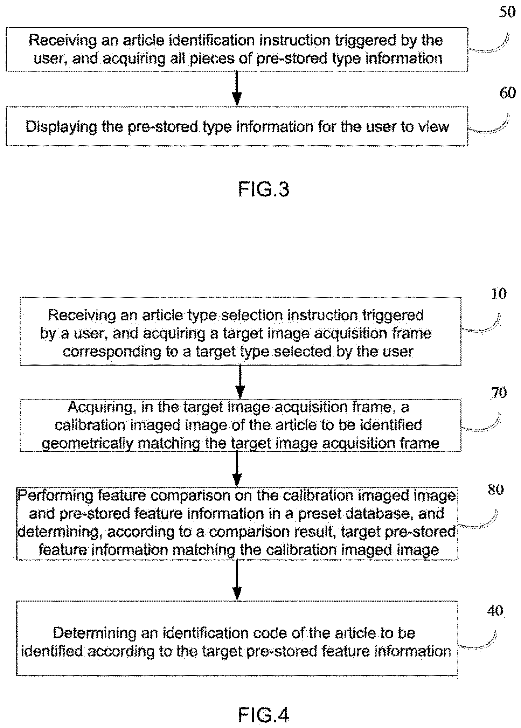

In the above, as a possible embodiment, as shown in FIG. 3, before executing step 10, the terminal may further perform the following steps:
step 50, receiving an article identification instruction triggered by the user, and acquiring all pieces of pre-stored type information; and
step 60, displaying the pre-stored type information for the user to view.

Taking a key being an article to be identified as an example, a functional button for triggering a key identification instruction may be preset in the terminal, and type information on various different types of keys is stored in advance in a preset position of the terminal to serve as the pre-stored type information.

In the above, one key type may correspond to one key model or a plurality of different key models, and keys corresponding to each key model are the same. The pre-stored type information on keys may include specific specification parameters of keys of all models, for example, number of teeth, size of teeth, outline graphs of key types and other information. Besides, a key image acquisition frame may be set in advance for each key type, the outline of the image acquisition frame of each key type is determined by the outline of the key corresponding to the key type, or the image acquisition frames corresponding to different types of keys are set to uniformly have the same outline, for example, a rectangular outline, and the key acquisition frames with the same outline are set to different size parameters based on the complexity of the key tooth profiles or actual specifications of the keys, in this way, when the user clicks the functional button corresponding to the key identification instruction, the terminal may receive the key identification instruction triggered by the user, and obtain all pieces of pre-stored type information in the preset storage position based on the key identification instruction.

When all pieces of key pre-stored type information is acquired, all pieces of pre-stored type information may be displayed on a display interface of the terminal. In the above, as a possible embodiment, when there are too many key types, it is possible that only icons of various key types of the keys are displayed on the display interface of the terminal, and the various key type icons are respectively bound with detailed clicking items for viewing detailed pre-stored types of the keys, and when the user clicks a key type icon, a display page of detailed information on this key type is entered.

The user performs rough manual comparison on the key to be identified and the key type information displayed on the display interface, and judges a target key type matching the key to be identified. Then the user may trigger and select the type selection instruction matching the target key type through a pre-configured key type selection function button. Upon receiving the type selection instruction triggered by the user, the terminal may determine the key type selected by the user based on the type selection instruction, and then acquire an image acquisition frame corresponding to the key type, that is, the target image acquisition frame.

In some possible embodiments, the image acquisition frame in the present disclosure may include information such as outline of the image acquisition frame and specification parameter corresponding to the outline.

Step 20, acquiring an imaged image of an article to be identified in the target image acquisition frame.

Exemplarily, when the target image acquisition frame is acquired, the image acquisition function module in the terminal may be invoked, and an image acquisition interface including the target image acquisition frame is displayed, for performing image acquisition based on the target image acquisition frame in the interface, to obtain a standard imaged image of the article to be identified.

As shown in FIG. 4, in an embodiment, in order to improve the standardization of image data and the accuracy of the image data analysis result, image analysis may be performed by acquiring a calibration imaged image geometrically matching the target image acquisition frame; and exemplarily, step 20 may include the following steps:
step 70, acquiring, in the target image acquisition frame, a calibration imaged image of the article to be identified geometrically matching the target image acquisition frame.

Exemplarily, based on the above article identification method, in some possible embodiments of the present disclosure, the calibration imaged image geometrically matching the target image acquisition frame may be set as follows: a longest side of a key imaged image of the key to be identified in the target image acquisition frame overlaps a long side of the rectangular target image acquisition frame, and a point farthest from the longest side in the key imaged image overlaps the other long side of the rectangular target image acquisition frame. By acquiring the calibration imaged image, standardization of data may be improved, and an accurate and reliable analysis result may be obtained.

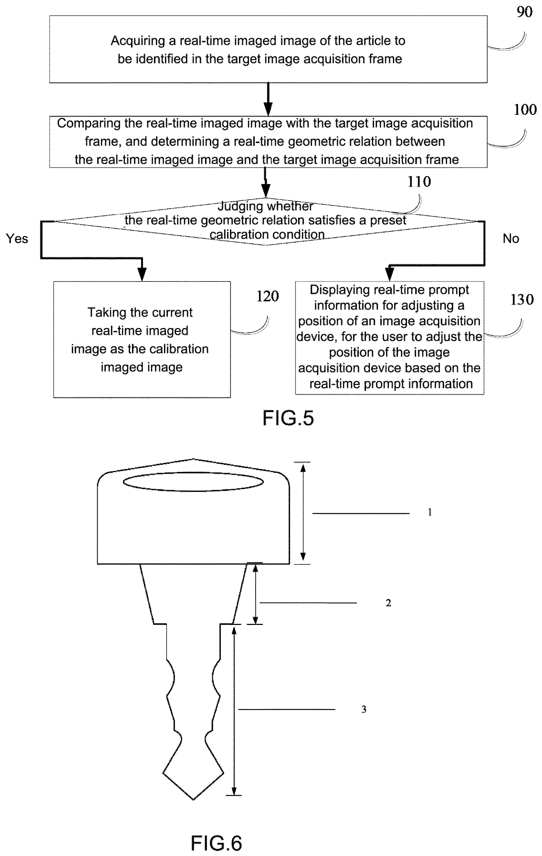

As shown in FIG. 5, in an embodiment, in order to obtain an accurate and standard calibration imaged image, exemplarily, step 70 may include the following steps:
step 90, acquiring a real-time imaged image of the article to be identified in the target image acquisition frame;
step 100, comparing the real-time imaged image with the target image acquisition frame, and determining a real-time geometric relation between the real-time imaged image and the target image acquisition frame;
step 110, judging whether the real-time geometric relation satisfies a preset calibration condition, wherein if yes, go to step 120; and if not, go to step 130;
step 120, taking the current real-time imaged image as the calibration imaged image; and
step 130, displaying real-time prompt information for adjusting a position of an image acquisition device, for the user to adjust the position of the image acquisition device based on the real-time prompt information.

Exemplarily, as shown in FIG. 6, FIG. 6 is a diagram illustrating a key structure, wherein the key may generally include a key handle 1, a reservation region 2, and a tooth profile region 3. For keys, the same key type corresponds to the same key model, that is, both the key handle 1 and the reservation region 2 are the same, and keys of the same type and different specifications are mainly different in the tooth profile region 3.

When performing the image acquisition, the terminal may take the tooth profile region 3 of the key as an acquisition object, and only acquire an image of the tooth profile region 3 of the key for analysis. Alternatively, an entirety composed of the reservation region 2 and the tooth profile region 3 other than the key handle 1 may be taken as an image acquisition object, and after an image is acquired, an image of the tooth profile region 3 part is identified and extracted for analysis. It may be understood that the foregoing embodiments are merely examples, and in some embodiments of the present disclosure, the determination of acquisition object may be determined according to the difficulty of determining or the difficulty of acquiring the calibration imaged image, but may at least include the tooth profile region 3 part.

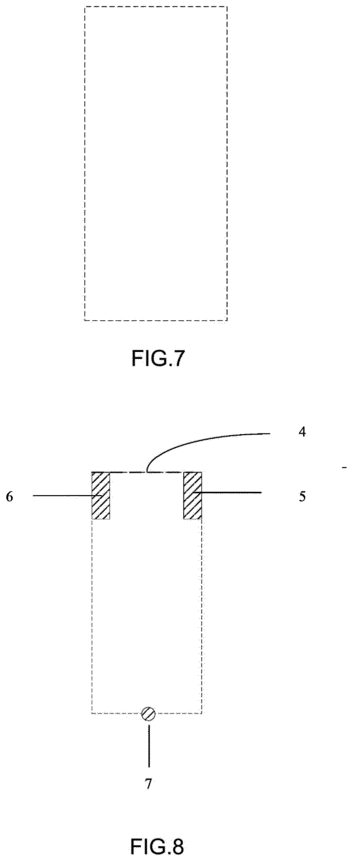

Taking the above tooth profile region 3 of the key in FIG. 6 being an acquisition object as an example, as shown in FIG. 7 and FIG. 8, FIG. 7 is a diagram of an example of an image acquisition frame, and FIG. 8 is a diagram of analysis elements of the image acquisition frame; as shown in FIG. 7, the image acquisition frame is a rectangular frame, and is displayed in an image acquisition interface in a form of dotted line, and the key image may be displayed in an appropriate position of the image acquisition frame by adjusting the position of the image acquisition device, so as to obtain the calibration imaged image; as shown in FIG. 8, analysis elements such as a positioning line 4, a limiting region 5, a limiting region 6, and a vertex detection region 7 may be set in advance for the image acquisition frame, wherein the above elements may be set based on features such as shape or structure of the article to be identified, and information such as relative position information on these analysis elements is pre-stored in a preset position, so that in the subsequent process of acquiring the calibration imaged image, a real-time geometric relation between the real-time imaged image and the target image acquisition frame, and the calibration condition of the calibration imaged image are determined based on these analysis elements.

It may be seen that, based on the above article identification method, after the target image acquisition frame is obtained, the image acquisition function module is invoked, in a period of time from starting to display the image acquisition interface including the target image acquisition frame to completing the acquisition of the calibration imaged image, the real-time imaged image in the image acquisition interface may be acquired periodically with a preset length of time, relative position information on the real-time imaged image and the image acquisition frame in the image acquisition interface is determined, a real-time relative position of the real-time imaged image to the analysis elements of the image acquisition frame is determined based on the relative position information on the analysis elements of the image acquisition frame relative to the image acquisition frame and the relative position information on the real-time imaged image relative to the image acquisition frame, and the real-time geometric relation determined by the real-time relative position is taken as the relative geometric relation between the real-time imaged image and the target image acquisition frame.

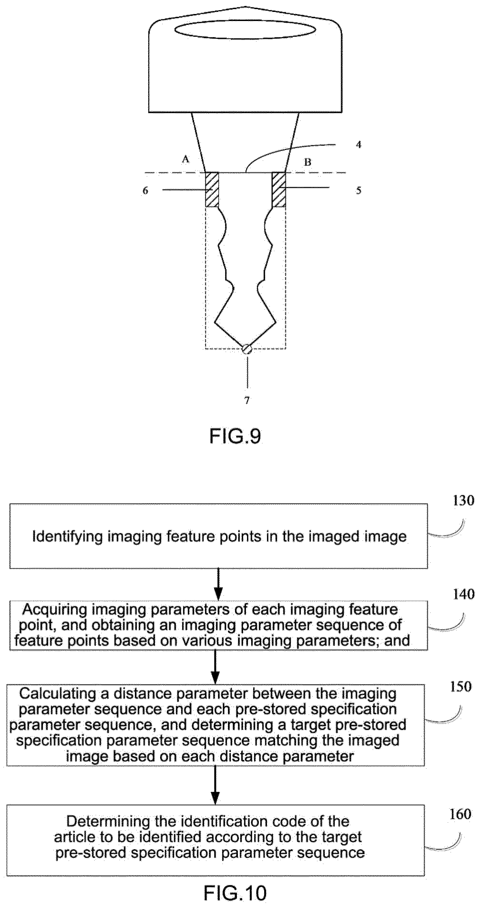

Exemplarily, as shown in FIG. 9, FIG. 9 is an exemplary diagram of the real-time imaged image of the tooth profile region 3 being the calibration imaged image, wherein a line segment AB is a line segment determined by vertexes of the reservation region 2 on a partition line between the tooth profile region 3 and the reservation region 2, and as shown in the drawing, in the calibration imaged image, the line segment AB overlaps the limiting line 1, that is, the limiting line 1 in the target image acquisition frame is in a state of being completely filled by the image, the vertex in the key image is also in the filled state, while the limiting region 5 and the limiting region 6 are in a blank area, a processor or a server detects no image in the two regions, hence, the calibration condition may be set to simultaneously satisfy that the positioning line 4 in the target image acquisition frame is in the fully filled state, no image information is detected in the limiting region 5 and the limiting region 6, and the vertex in the key image farthest from the limiting line is located in the vertex detection region 7 of the key.

In the above, the above content of the real-time geometric relation may be determined by the following three geometric objects: 1) whether the limiting line is filled by the real-time image; 2) whether image information is detected in the limiting region 5 or the limiting region 6, that is, whether the real-time imaged image overlaps the limiting region 5 or the limiting region 6; and 3) whether imaging of the key vertex is located in the vertex detection region 7.

When the real-time imaged image is obtained, the real-time geometric relation may be determined according to the above geometric object, and the geometric relation is compared with the above calibration condition, and when the real-time geometric relation satisfies the calibration condition, the corresponding real-time imaged image is determined as the calibration imaged image.

In the above article identification method, when it is judged that the real-time imaged image is not the calibration imaged image, the terminal may display the real-time prompt information for adjusting the position of the image acquisition device, so as to adjust the position of the image acquisition device based on the real-time prompt information, for example, the prompt information may be "Please move/rotate your device, so as to acquire an accurate calibration imaged image." Besides, the prompt information further may be displayed based on the above geometric object, for example, "The limiting line is not filled up by the real-time imaged image, please move/rotate your device, so as to acquire an accurate calibration imaged image."

Optionally, in some possible embodiments, the terminal may further identify an imaging point of the key vertex or the line segment AB in an image by an image identification algorithm, and determine specific adjustment parameters, such as an adjusted angle, distance or orientation, according to a distance or orientation detected for a vertex imaged point and a vertex of the target image acquisition frame, or a distance, orientation or angle between the line segment AB and the positioning line 4, so as to determine the real-time prompt information.

Step 30, performing feature comparison on the imaged image and pre-stored feature information in a preset database, and determining, according to a comparison result, target pre-stored feature information matching the imaged image.

Exemplarily, the pre-stored feature information refers to feature information on existing keys, the feature information on the keys may be obtained from the key manufacturers each time the keys are manufactured, and the feature information on the keys is stored in the preset storage position of the terminal, or the feature information on the keys is obtained based on depth learning, and the feature information on the keys is added to the preset database of the terminal. In the above, the preset database refers to a database configured to store the feature information on the keys. In the preset database, each key corresponds to one piece of pre-stored feature information. After the imaged image is obtained, the imaged image is compared with each piece of pre-stored feature information in the preset database one by one, to determine the target pre-stored feature information that best matches the imaged image. In the above, the type of the pre-stored feature information may be determined based on a manner of feature comparison.

As shown in FIG. 4, in one embodiment where step 70 is adopted in step 20, step 30 may include the following step:
step 80, performing feature comparison on the calibration imaged image and pre-stored feature information in a preset database, and determining, according to a comparison result, target pre-stored feature information matching the calibration imaged image.

Exemplarily, if the terminal determines the imaged image acquired in step 20 as the calibration imaged image, when executing step 30, the terminal may compare the calibration imaged image with each piece of pre-stored feature information in the preset database one by one, determine the target pre-stored feature information according to a comparison result between the calibration imaged image and each piece of pre-stored feature information, so as to improve the accuracy of the target pre-stored feature information determination process, and ensure to obtain an accurate and reliable analysis result

As shown in FIG. 10, in an embodiment, in order to simplify the feature comparison analysis process, and improve the accuracy and quickness of the feature comparison analysis process, the pre-stored feature information may include a pre-stored specification parameter sequence of the article sample feature points; and as a possible embodiment, step 30 may include the following steps:
step 130, identifying imaging feature points in the imaged image;
step 140, acquiring imaging parameters of each imaging feature point, and obtaining an imaging parameter sequence of feature points based on various imaging parameters; and
step 150, calculating a distance parameter between the imaging parameter sequence and each pre-stored specification parameter sequence, and determining a target pre-stored specification parameter sequence matching the imaged image based on each distance parameter.

Exemplarily, the pre-stored specification parameter sequence of the article sample feature points refers to a sequence obtained by arranging the specification parameters of the actual article samples in a pre-determined rule or format, and each model specification parameter sequence is stored in a preset position as a pre-stored type parameter.

Taking the key as an example, for the key, a position where the teeth is located may be used as a feature point, and the tooth depth or the tooth height of the position where the teeth is located is used as a specification parameter of the feature point. The specification parameters of the feature point are arranged according to the feature point position and a specific position order, to obtain a pre-stored specification parameter sequence of the key sample.

When the terminal executes step 30, the key image outline may be obtained from the key image first, and a right angle point of the rectangular image acquisition frame may be taken as an origin, wherein a straight line where a long side is located is taken as a horizontal coordinate, and a straight line perpendicular to the horizontal coordinate in a plane where the key image is located is taken as a vertical coordinate to construct a rectangular coordinate system, one pixel is taken as one unit distance, and coordinate parameters of each point on the outline may be determined. As the relative position of the calibration imaged image and the target image acquisition frame is determined, the parameters of the target image acquisition frame are determined, and the target image acquisition frame and the position of the constructed coordinate system are determined, the horizontal coordinate (abscissa) of the position where the tooth in the calibration imaged image of the key are located may be determined based on the relative position of the actual key tooth, a vertical coordinate value corresponding to the horizontal coordinate on the key outline is determined, the vertical ordinate value is taken as the corresponding tooth depth or tooth height, and further an imaging parameter sequence of the calibration imaged image of the key is obtained.

When a distance parameter between the imaging parameter sequence and the pre-stored specification parameter sequence is calculated, the terminal may convert the imaging parameter sequence into a standard imaging parameter sequence at a set ratio of imaging to specification (for example, the set ratio may be 1:1) based on a conversion coefficient of the imaging parameter and actual specification parameter, then, a distance value between the standard imaging parameter sequence and each pre-stored specification parameter sequence is calculated, and each distance value is taken as a distance parameter between the imaging parameter sequence and each pre-stored specification parameter sequence.

In the above, the preceding distance value may be a Euclidean distance, and also may be a Pearson correlation coefficient, etc. After determining the distance parameter between the imaging parameter sequence and each pre-stored specification parameter sequence, the terminal may take the pre-stored specification parameter sequence with a smallest distance parameter or the pre-stored specification parameter sequence less than a preset distance parameter threshold as the target pre-stored feature information. Certainly, in some other possible embodiments of the present disclosure, the terminal may also convert the specification parameter sequence of various article samples into a standard specification parameter sequence based on the conversion coefficients of the imaging parameters and actual specification parameters in advance, and store the standard specification parameter sequence of the article samples in a preset position, as a pre-stored specification parameter sequence of the article samples. Exemplarily, in the article identification method provided in the present disclosure, the pre-stored feature information on all article samples may be stored in the same preset storage position in advance, or the pre-stored feature information on different keys may be separately stored based on the key types.

In addition, the pre-stored feature information may also be a pre-stored slope sequence or a pre-stored derivative sequence of various line segments of the image outlines of the key samples. When obtaining the key imaged image, the terminal may calculate the imaging slope sequence or the imaging derivative sequence of the imaged image outline of the key, and determine a target pre-stored slope or a target pre-stored derivative sequence according to the distance parameter of the corresponding pre-stored slope sequence or derivative sequence.

In addition, the target pre-stored feature information may also be determined based on image similarity. Exemplarily, the pre-stored feature information may also be a pre-stored grayscale parameter of the article sample image, for example, in the foregoing example where the key sample is taken as the article sample, the pre-stored feature information may be a pre-stored grayscale parameter of the key sample image. When obtaining grayscale parameter to be detected of the key to be identified, the terminal may calculate the similarity between the grayscale parameter to be detected and the pre-stored grayscale parameter according to an SFIT algorithm or a histogram matching algorithm, and determine a target pre-stored grayscale parameter based on the similarity, so as to take the target pre-stored grayscale parameter as target pre-stored feature information; for example, the terminal may determine the grayscale parameter with the greatest similarity to the grayscale parameter to be detected in the pre-stored grayscale parameters, as the target pre-stored grayscale parameter.

Step 40, determining an identification code of the article to be identified according to the target pre-stored feature information.

In the above, as shown in FIG. 10, in an embodiment where step 80 to step 100 are adopted in step 30, step 40 may include the following step:
step 160, determining the identification code of the article to be identified according to the target pre-stored specification parameter sequence.

Exemplarily, the terminal may take the identification code of the article sample as the pre-stored feature information on the article sample, and when the target pre-stored identification code is determined, directly take the target pre-stored identification code as the identification code of the article to be identified. In the above, the terminal may edit a specific unique code in a specific format in advance, associate the specific unique code of each article sample with the pre-stored feature information, and when the target pre-stored feature information is determined, acquire a unique code associated with the target pre-stored feature information as the identification code of the article to be identified.

Exemplarily, taking a key being an article to be identified as an example, the terminal may take a tooth profile code of a key sample as key pre-stored feature information, meanwhile take the pre-stored feature information as an identification code of each key sample, and when a target pre-stored tooth profile code is determined, directly take the target pre-stored tooth profile code as an identification code of the key to be identified, and the user may copy and manufacture the key based on the key identification code. In order to facilitate storage and user memory, a simpler unique random code may also be generated. As an identification code of the key sample, a tooth profile code of the key sample is taken as pre-stored feature information on the key sample, and the tooth profile code of the same key sample is associated with a unique random code, when the target pre-stored tooth profile code is determined, a target unique random code associated with the target pre-stored tooth profile code is acquired, the target unique random code is taken as an identification code of an article to be identified; when copying the key, information such as a tooth profile code of the key to be identified may be determined first based on the identification code, and then the key is copied and manufactured based on information such as the tooth profile code.

It should be specially noted that the steps of the article identification method provided in the present disclosure may be executed on the same device or terminal, and also may be executed on a plurality of different terminal devices; for example, an imaged image of an article to be identified may be acquired by a terminal such as a cellphone of a user, and then the imaged image is sent to a background server, the background server compares the imaged image with pre-stored feature information in the background server, determines an identification code of the article to be identified according to a comparison result, and then sends the identification code of the article to be identified to the cellphone terminal of the user.

In the above article identification method, a target image acquisition frame matching an article to be identified may be accurately and quickly obtained based on a type selection instruction sent by the user, and an accurate and standard image data is obtained by standardizing the image acquisition process through the target image acquisition frame. For the imaging data of the same article and the actual specification feature data thereof, a corresponding matching relation generally exists, and the terminal may determine the target pre-stored feature information matching the imaging data based on a comparison result between the imaging data of the article to be identified and the pre-stored feature information, and take an identification code associated with the target pre-stored feature information as an identification code of the article to be identified.

In the above article identification process, the identification code of the article to be identified may be obtained by the user just by acquiring the imaged image of the article to be identified with the image acquisition frame through a terminal device having an image acquiring function, without the need of complicated operations or a complex professional system, thus simplifying the article identification process, and reducing the difficulty of article identification.

Exemplarily, when the key needs to be identified, the user may obtain the identification code of the key to be identified just by acquiring the imaged image of the key to be identified with the image acquisition frame through the terminal device having the image acquiring function, and further the key may be copied based on the key identification code.

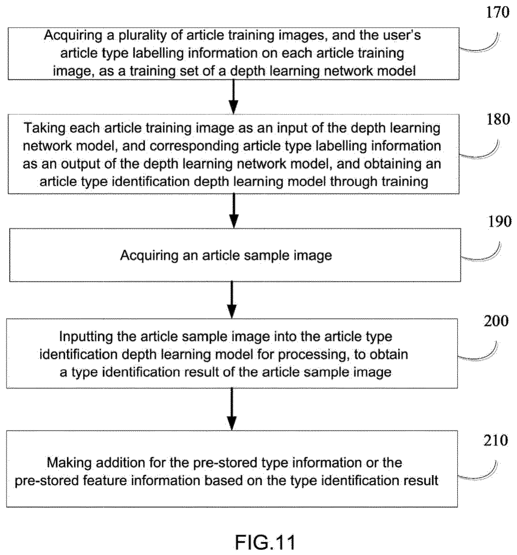

Referring to FIG. 11, FIG. 11 is a schematic flowchart of steps of an article identification method provided in Embodiment 2 of the present disclosure. The article identification method may train an article sample image feature identification model through depth learning, and perform feature identification on a key picture by utilizing a trained model, so as to supplement the type to be identified, the article model or pre-stored feature information, and enrich data of an article sample database, and improve the accuracy of article identification. Exemplarily, the article identification method further includes the following steps:
step 170, acquiring a plurality of article training images, and the user's article type labelling information on each article training image, as a training set of a depth learning network model.

Exemplarily, taking a key as an example, an article training image refers to a key training picture configured as an input of a depth learning model, and trained to obtain a key type identification depth learning model. The user may acquire pictures of a plurality of keys in advance through a network and an internal historical key picture database, or crawl the key pictures by utilizing a web crawler, to serve as a key training picture, and then the user adds standard information on the key type to each key training picture. A model training processor or server constructs a training set according to the obtained key training picture and key type labelling information, wherein the training set may be configured to train the key type identification model.

Step 180, taking each article training image as an input of the depth learning network model, and corresponding article type labelling information as an output of the depth learning network model, and obtaining an article type identification depth learning model through training.

Exemplarily, the key training pictures in the training set may be input into the depth learning model constructed on the basis of a depth learning framework for processing, and for each key training picture, a convolution operation is performed on an image through a convolution layer in the depth learning model, to obtain an image feature value; then, the image feature value is input into a pooling layer, and a pooling value of the image feature value is obtained, and then the pooling value of the image is input into a fully-connected layer for processing, to obtain an output result of each key training picture of the key training pictures. For each key training image, a difference between an actual output result of the key training image and the corresponding key type labelling information in the training set is calculated, and then a weight matrix is directionally propagated and adjusted in a manner of minimizing errors, so as to obtain a trained key type identification depth learning model, wherein the obtained key type identification depth learning network model may include a plurality of convolution layers, a plurality of pooling layers, and a plurality of fully-connected layers.

After the key type identification depth learning model is obtained, a new key image may the processed by this model, to identify a key type corresponding to the key image, and add information to the pre-stored article type information or pre-stored feature information based on the key type identification result, thus enriching the data amount of the two kinds of information data, and improving efficiency of article identification and accuracy of identification. Exemplarily, the process of data addition using the key type identification depth learning model may include the following steps:
step 190, acquiring an article sample image.

Exemplarily, the article sample images may be acquired by the user or crawled by a web crawler on an external website in advance, for example, a key image crawled on a public website, as a key sample image.

Step 200, inputting the article sample image into the article type identification depth learning model for processing, to obtain a type identification result of the article sample image.

For each key sample image obtained in step 190, the terminal may input the key sample image into the above trained key type identification depth learning model for processing. In a key type identification depth learning model, a convolution operation is performed on the key article image through a convolution layer in the depth learning model by utilizing the weight matrix in the trained model, to obtain the image feature value, and then the image feature value is input into a pooling layer, a pooling value of the image feature value is obtained, and then the pooling value of the image is input into a fully-connected layer for processing, to obtain the type identification result of the key sample image.

In addition, when the type identification result of the key sample image is obtained each time, the user may be prompted to perform type labeling on the key sample image, and return back the resultant as a result, so that the key type identification depth learning model is continuously improved, and the accuracy of type identification is continuously improved.

Step 210, making addition (supplementary) for the pre-stored type information or the pre-stored feature information based on the type identification result.

Exemplarily, for the key type identification result of each key sample image, the terminal may compare the key type identification result with the pre-stored type information, and judge whether a key type consistent with the key type identification result exists in the pre-stored type information. If the key type consistent with the key type identification result exists in the pre-stored type information, feature comparison may be performed on the key sample image corresponding to the key type identification result and the pre-stored feature information corresponding to the key type, wherein the feature comparison method is consistent with the feature comparison method for the above imaged image and the pre-stored feature information, to judge whether the pre-stored feature information matching the key sample image exists in the pre-stored feature information; if the pre-stored feature information matching the key sample image exists, the pre-stored type information or the pre-stored feature information is not supplemented; and if the pre-stored feature information matching the key sample image does not exist, the feature information on the key sample image may be obtained, and the obtained feature information, taken as the pre-stored feature information, is added to the storage position of the existing pre-stored feature information.

In the above article identification method provided in the present disclosure, if the key type consistent with the key type identification result does not exist in the pre-stored type information, a new key type may be added to the pre-stored key type information, and the feature information on the key sample image is added to the pre-stored feature information.

In the above article identification method, the article sample image feature identification model is trained through depth learning, and feature identification is performed on a key picture by utilizing a trained model, so as to supplement the type to be identified, the article model or pre-stored feature information, and enrich data of an article sample database, and improve the accuracy of article identification.

In addition, the present disclosure further provides an article identification device, wherein the article identification device includes a memory, a processor, and an article identification program stored in the memory and capable of running on the processor, and when the processor executes the article identification program, the steps of the article identification method provided in the above embodiments are implemented.

Furthermore, the present disclosure further provides a computer readable storage medium, wherein the computer readable storage medium includes an article identification program, which, when being executed by a processor, implements the steps of the article identification method as described in the above embodiments.

It needs to be noted that in the text, terms "include", "contain" or any other derivatives thereof are intended to be non-exclusive, thus a process, method, article or system including a series of elements not only include those elements, but also include other elements that are not listed definitely, or further include elements inherent to such process, method, article or system. Without more restrictions, an element defined with wordings "include a..." does not exclude presence of other same elements in the process, method, article or system including said element.

The above serial numbers of the embodiments provided in the present disclosure are merely for the descriptive purpose, but do not represent pros and cons of the embodiments.

Through the description of the foregoing embodiments, it would be clear to those skilled in the art that the method of the above embodiments may be implemented by software plus a necessary general hardware platform, and certainly may also be implemented by hardware, but in many cases, the former is a better embodiment. Based on such understanding, the technical solutions in essence or parts making contribution to the prior art of the technical solutions of the present disclosure may be embodied in form of a software product, and this computer software product is stored in the above storage medium (such as a ROM/RAM, a magnetic disk, and an optical disk), including several instructions for making one terminal device (which may be a television, a mobile phone, a computer, a server, an air conditioner, or a network device) execute the methods illustrated in various embodiments of the present disclosure.

The above examples are only a part of optional embodiments of the present disclosure, and do not limit the scope of protection of patent of the present disclosure, and all the equivalent structure or equivalent flow transformations made by utilizing the contents of the specification and the accompanying drawings of the present disclosure, which can be directly or indirectly applied to other related technical fields, are likewise included in the scope of protection of patent of the present disclosure.

### Industrial Applicability

The article type selection instruction triggered by a user is received, and the target image acquisition frame corresponding to the target type selected by the user is acquired; the imaged image of the article to be identified in the target image acquisition frame is acquired; feature comparison is performed on the imaged image and pre-stored feature information in the preset database, and the target pre-stored feature information matching the imaged image is determined according to a comparison result; and the identification code of the article to be identified is determined according to the target pre-stored feature information. Through the above manner, the target image acquisition frame matching the article to be identified may be accurately and quickly obtained based on the type selection instruction sent by the user, and the accurate and standard image data is obtained by standardizing the process of acquiring the image through the target image acquisition frame. For the imaging data of the same article and the actual specification feature data thereof, a corresponding matching relation exists, and the target pre-stored feature information matching the imaging data may be determined based on a comparison result between the imaging data of the article to be identified and the pre-stored feature information, and the identification code associated with the target pre-stored feature information is taken as the identification code of the article to be identified. In the above article identification process, the identification code of the article to be identified may be obtained just by acquiring the imaged image of the article to be identified with the image acquisition frame through the terminal device having an image acquiring function, without the need of complicated operations or a complex professional system, thus simplifying the article identification process, and reducing the difficulty of article identification.

## Claims

1. An article identification method, the method being performed on one terminal only wherein the terminal is a personal computer, wherein the article identification method comprises:
acquiring a plurality of article training images, and article type labelling information on each of the article training images of the user, to serve as a training set of a depth learning network model; and
taking each of the article training images as an input of the depth learning network model, and corresponding article type labelling information as an output of the depth learning network model, and obtaining a depth learning model for article type identification through training;
acquiring an article sample image;
inputting the article sample image into the depth learning model for article type identification for processing, to obtain a type identification result of the article sample image; and
making the pre-stored type information or the pre-stored feature information increased based on the type identification result;
receiving an article identification instruction triggered by the user, and acquiring all pieces of pre-stored type information; and displaying the pre-stored type information for the user to view;
receiving an article type selection instruction triggered by a user, and acquiring a target image acquisition frame corresponding to a target type selected by the user;
acquiring an imaged image of an article to be identified in the target image acquisition frame;
performing feature comparison on the imaged image and pre-stored feature information in a preset database, and determining, according to a comparison result, target pre-stored feature information matching the imaged image; and
determining an identification code of the article to be identified according to the target pre-stored feature information.

2. The article identification method according to any one of claims 1, wherein the pre-stored feature information comprises pre-stored specification parameter sequences of article sample feature points;
the performing feature comparison on the imaged image and pre-stored feature information in a preset database, and determining, according to a comparison result, target pre-stored feature information matching the imaged image comprises:
identifying imaging feature points in the imaged image;
acquiring imaging parameters of each of the imaging feature points, and obtaining an imaging parameter sequence of feature points based on each of the imaging parameters; and
calculating distance parameters between the imaging parameter sequence and each of the pre-stored specification parameter sequences, and determining a target pre-stored specification parameter sequence matching the imaged image based on each of the distance parameters; and
the determining an identification code of the article to be identified according to the target pre-stored feature information comprises:
determining the identification code of the article to be identified according to the target pre-stored specification parameter sequence.

3. The article identification method according to claim 2, wherein the calculating a distance parameter between the imaging parameter sequence and each of the pre-stored specification parameter sequences comprises:
converting the imaging parameter sequence into a standard imaging parameter sequence at a set ratio of imaging to specification, based on a conversion coefficient of the imaging parameters and actual specification parameters; and
calculating a distance value between the standard imaging parameter sequence and each of the pre-stored specification parameter sequences, and taking each distance value as the distance parameter between the imaging parameter sequence and each of the pre-stored specification parameter sequences.

4. The article identification method according to claim 2, wherein the pre-stored specification parameter sequences are sequences obtained by arranging specification parameters of article samples in a pre-determined rule or format.

5. The article identification method according to claim 2, wherein the target pre-stored feature information is a pre-stored specification parameter sequence with a smallest distance parameter or a pre-stored specification parameter sequence less than a preset distance parameter threshold.

6. The article identification method according to claim 2, wherein the pre-stored feature information is a pre-stored grayscale parameter of the article sample image; and
the target pre-stored feature information is a target pre-stored grayscale parameter, wherein the target pre-stored grayscale parameter is a grayscale parameter with greatest similarity to a grayscale parameter to be detected in pre-stored grayscale parameters.

7. The article identification method according to any one of claims 1 to 6, wherein the acquiring an imaged image of an article to be identified in the target image acquisition frame comprises:
acquiring, in the target image acquisition frame, a calibration imaged image of the article to be identified geometrically matching the target image acquisition frame; and
the performing feature comparison on the imaged image and pre-stored feature information in a preset database, and determining, according to a comparison result, target pre-stored feature information matching the imaged image comprises:
performing feature comparison on the calibration imaged image and the pre-stored feature information in the preset database, and determining, according to a comparison result, target pre-stored feature information matching the calibration imaged image.

8. The article identification method according to claim 7, wherein the acquiring, in the target image acquisition frame, a calibration imaged image of the article to be identified geometrically matching the target image acquisition frame comprises:
acquiring a real-time imaged image of the article to be identified in the target image acquisition frame;
comparing the real-time imaged image with the target image acquisition frame, and determining a real-time geometric relation between the real-time imaged image and the target image acquisition frame; and
judging whether the real-time geometric relation satisfies a preset calibration condition, wherein
if yes, a current real-time imaged image is taken as the calibration imaged image; and
if not, real-time prompt information for adjusting a position of an image acquisition device is displayed, for the user to adjust the position of the image acquisition device based on the real-time prompt information.

9. The article identification method according to any one of claims 1 to 8, wherein the article to be identified comprises a key to be identified, and the article identification code comprises a tooth profile code for the key.

10. The article identification method according to any one of claims 1 to 9, wherein the pre-stored feature information is pre-stored feature information on key.

11. An article identification device, wherein the article identification device comprises: a memory, a processor, and article identification program stored on the memory and executable on the processor, and the article identification program, when being executed by the processor, implements the steps of the article identification method according to any one of claims 1 to 10.

12. A computer readable storage medium, wherein the computer readable storage medium stores an article identification program, which, when being executed by a processor, implements the steps of the article identification method according to any one of claims 1 to 10.

## Patentansprüche

1. Verfahren zur Gegenstandsidentifikation, wobei das Verfahren nur auf einem einzigen Endgerät durchgeführt wird, wobei das Endgerät ein Personalcomputer ist, wobei das Verfahren zur Gegenstandsidentifikation Folgendes umfasst:
Erfassen einer Mehrzahl von Gegenstands-Trainingsbildern sowie von Gegenstandstyp-Kennzeichnungsinformation zu jedem der Gegenstands-Trainingsbilder des Benutzers, um als Trainingssatz eines Deep-Learning-Netzwerkmodells zu dienen; und
Verwenden jedes der Gegenstands-Trainingsbilder als Eingabe des Deep-Learning-Netzwerkmodells und entsprechender Gegenstandstyp-Kennzeichnungsinformation als Ausgabe des Deep-Learning-Netzwerkmodells und Erhalten eines Deep-Learning-Modells zur Gegenstandstypidentifikation durch Training;
Erfassen eines Gegenstandsprobenbildes;
Eingeben des Gegenstandsprobenbildes in das Deep-Learning-Modell zur Gegenstandstypidentifikation zur Verarbeitung, um ein Typidentifikationsergebnis des Gegenstandsprobenbildes zu erhalten; und
Erweitern der vorab gespeicherten Typinformation oder der vorab gespeicherten Merkmalsinformation auf Grundlage des Typidentifikationsergebnisses;
Empfangen einer durch den Benutzer ausgelösten Gegenstandsidentifikationsanweisung und Erfassen aller vorab gespeicherten Typinformationen; und Anzeigen der vorab gespeicherten Typinformation zum Einsehen durch den Benutzer;
Empfangen einer durch einen Benutzer ausgelösten Gegenstandstyp-Auswahlanweisung und Erfassen eines Ziel-Bilderfassungsrahmens, der einem durch den Benutzer ausgewählten Zieltyp entspricht;
Erfassen eines Abbildungsbildes eines zu identifizierenden Gegenstands in dem Ziel-Bilderfassungsrahmen;
Durchführen eines Merkmalsvergleichs zwischen dem Abbildungsbild und vorab gespeicherter Merkmalsinformation in einer vorgegebenen Datenbank und Bestimmen, gemäß einem Vergleichsergebnis, von vorab gespeicherter Ziel-Merkmalsinformation, die mit dem Abbildungsbild übereinstimmt; und
Bestimmen eines Identifikationscodes des zu identifizierenden Gegenstands gemäß der vorab gespeicherten Ziel-Merkmalsinformation.

2. Verfahren zur Gegenstandsidentifikation nach Anspruch 1, wobei die vorab gespeicherte Merkmalsinformation vorab gespeicherte Spezifikationsparametersequenzen von Gegenstandsproben-Merkmalspunkten umfasst;
das Durchführen eines Merkmalsvergleichs zwischen dem Abbildungsbild und vorab gespeicherter Merkmalsinformation in einer vorgegebenen Datenbank und Bestimmen, gemäß einem Vergleichsergebnis, von vorab gespeicherter Ziel-Merkmalsinformation, die mit dem Abbildungsbild übereinstimmt, Folgendes umfasst:
Identifizieren von Abbildungsmerkmalspunkten in dem Abbildungsbild;
Erfassen von Abbildungsparametern jedes der Abbildungsmerkmalspunkte und Erhalten einer Abbildungsparametersequenz von Merkmalspunkten auf Grundlage jedes der Abbildungsparameter; und
Berechnen von Abstandsparametern zwischen der Abbildungsparametersequenz und jeder der vorab gespeicherten Spezifikationsparametersequenzen und Bestimmen einer vorab gespeicherten Ziel-Spezifikationsparametersequenz, die mit dem Abbildungsbild übereinstimmt, auf Grundlage jedes der Abstandsparameter; und
das Bestimmen eines Identifikationscodes des zu identifizierenden Gegenstands gemäß der vorab gespeicherten Ziel-Merkmalsinformation Folgendes umfasst:
Bestimmen des Identifikationscodes des zu identifizierenden Gegenstands gemäß der vorab gespeicherten Ziel-Spezifikationsparametersequenz.

3. Verfahren zur Gegenstandsidentifikation nach Anspruch 2, wobei das Berechnen eines Abstandsparameters zwischen der Abbildungsparametersequenz und jeder der vorab gespeicherten Spezifikationsparametersequenzen Folgendes umfasst:
Umrechnen der Abbildungsparametersequenz in eine Standard-Abbildungsparametersequenz in einem festgelegten Verhältnis von Abbildung zu Spezifikation, auf Grundlage eines Umrechnungskoeffizienten der Abbildungsparameter und tatsächlicher Spezifikationsparameter; und
Berechnen eines Abstandswerts zwischen der Standard-Abbildungsparametersequenz und jeder der vorab gespeicherten Spezifikationsparametersequenzen und Verwenden jedes Abstandswerts als den Abstandsparameter zwischen der Abbildungsparametersequenz und jeder der vorab gespeicherten Spezifikationsparametersequenzen.

4. Verfahren zur Gegenstandsidentifikation nach Anspruch 2, wobei die vorab gespeicherten Spezifikationsparametersequenzen Sequenzen sind, die durch Anordnen von Spezifikationsparametern von Gegenstandsproben in einer vorbestimmten Regel oder einem vorbestimmten Format erhalten werden.

5. Verfahren zur Gegenstandsidentifikation nach Anspruch 2, wobei die vorab gespeicherte Ziel-Merkmalsinformation eine vorab gespeicherte Spezifikationsparametersequenz mit einem kleinsten Abstandsparameter oder eine vorab gespeicherte Spezifikationsparametersequenz ist, die kleiner als ein vorgegebener Abstandsparameter-Schwellenwert ist.

6. Verfahren zur Gegenstandsidentifikation nach Anspruch 2, wobei die vorab gespeicherte Merkmalsinformation ein vorab gespeicherter Graustufenparameter des Gegenstandsprobenbildes ist; und
die vorab gespeicherte Ziel-Merkmalsinformation ein vorab gespeicherter Ziel-Graustufenparameter ist, wobei der vorab gespeicherte Ziel-Graustufenparameter ein Graustufenparameter mit größter Ähnlichkeit zu einem zu detektierenden Graustufenparameter in vorab gespeicherten Graustufenparametern ist.

7. Verfahren zur Gegenstandsidentifikation nach einem der Ansprüche 1 bis 6, wobei das Erfassen eines Abbildungsbildes eines zu identifizierenden Gegenstands in dem Ziel-Bilderfassungsrahmen Folgendes umfasst:
Erfassen, in dem Ziel-Bilderfassungsrahmen, eines Kalibrierungs-Abbildungsbildes des zu identifizierenden Gegenstands, das geometrisch mit dem Ziel-Bilderfassungsrahmen übereinstimmt; und
das Durchführen eines Merkmalsvergleichs zwischen dem Abbildungsbild und vorab gespeicherter Merkmalsinformation in einer vorgegebenen Datenbank und Bestimmen, gemäß einem Vergleichsergebnis, von vorab gespeicherter Ziel-Merkmalsinformation, die mit dem Abbildungsbild übereinstimmt, Folgendes umfasst:
Durchführen eines Merkmalsvergleichs zwischen dem Kalibrierungs-Abbildungsbild und der vorab gespeicherten Merkmalsinformation in der vorgegebenen Datenbank und Bestimmen, gemäß einem Vergleichsergebnis, von vorab gespeicherter Ziel-Merkmalsinformation, die mit dem Kalibrierungs-Abbildungsbild übereinstimmt.

8. Verfahren zur Gegenstandsidentifikation nach Anspruch 7, wobei das Erfassen, in dem Ziel-Bilderfassungsrahmen, eines Kalibrierungs-Abbildungsbildes des zu identifizierenden Gegenstands, das geometrisch mit dem Ziel-Bilderfassungsrahmen übereinstimmt, Folgendes umfasst:
Erfassen eines Echtzeit-Abbildungsbildes des zu identifizierenden Gegenstands in dem Ziel-Bilderfassungsrahmen;
Vergleichen des Echtzeit-Abbildungsbildes mit dem Ziel-Bilderfassungsrahmen und Bestimmen einer geometrischen Echtzeitbeziehung zwischen dem Echtzeit-Abbildungsbild und dem Ziel-Bilderfassungsrahmen; und
Beurteilen, ob die geometrische Echtzeitbeziehung eine vorgegebene Kalibrierungsbedingung erfüllt, wobei,
falls ja, ein aktuelles Echtzeit-Abbildungsbild als das Kalibrierungs-Abbildungsbild verwendet wird; und,
falls nicht, Echtzeit-Hinweisinformation zum Anpassen einer Position einer Bilderfassungsvorrichtung angezeigt wird, damit der Benutzer die Position der Bilderfassungsvorrichtung auf Grundlage der Echtzeit-Hinweisinformation anpasst.

9. Verfahren zur Gegenstandsidentifikation nach einem der Ansprüche 1 bis 8, wobei der zu identifizierende Gegenstand einen zu identifizierenden Schlüssel umfasst und der Gegenstandsidentifikationscode einen Zahnprofilcode für den Schlüssel umfasst.

10. Verfahren zur Gegenstandsidentifikation nach einem der Ansprüche 1 bis 9, wobei die vorab gespeicherte Merkmalsinformation vorab gespeicherte Merkmalsinformation zu Schlüsseln ist.

11. Vorrichtung zur Gegenstandsidentifikation, wobei die Vorrichtung zur Gegenstandsidentifikation Folgendes umfasst: einen Speicher, einen Prozessor und ein auf dem Speicher gespeichertes und auf dem Prozessor ausführbares Gegenstandsidentifikationsprogramm, und das Gegenstandsidentifikationsprogramm, wenn es durch den Prozessor ausgeführt wird, die Schritte des Verfahrens zur Gegenstandsidentifikation nach einem der Ansprüche 1 bis 10 implementiert.

12. Computerlesbares Speichermedium, wobei das computerlesbare Speichermedium ein Gegenstandsidentifikationsprogramm speichert, das, wenn es durch einen Prozessor ausgeführt wird, die Schritte des Verfahrens zur Gegenstandsidentifikation nach einem der Ansprüche 1 bis 10 implementiert.

## Revendications

1. Procédé d'identification d'article, le procédé étant mis en œuvre sur un seul terminal, selon lequel le terminal est un ordinateur personnel, selon lequel le procédé d'identification d'article comprend :
l'acquisition d'une pluralité d'images d'entraînement d'article, et d'informations d'étiquetage de type d'article sur chacune des images d'entraînement d'article de l'utilisateur, pour servir d'ensemble d'entraînement d'un modèle de réseau d'apprentissage profond ; et
la prise de chacune des images d'entraînement d'article comme entrée du modèle de réseau d'apprentissage profond, et d'informations d'étiquetage de type d'article correspondantes comme sortie du modèle de réseau d'apprentissage profond, et l'obtention, par entraînement, d'un modèle d'apprentissage profond pour l'identification de type d'article ;
l'acquisition d'une image d'échantillon d'article ;
l'introduction de l'image d'échantillon d'article dans le modèle d'apprentissage profond pour l'identification de type d'article, pour traitement, afin d'obtenir un résultat d'identification de type de l'image d'échantillon d'article ; et
l'augmentation des informations de type préenregistrées ou des informations de caractéristiques préenregistrées sur la base du résultat d'identification de type ;
la réception d'une instruction d'identification d'article déclenchée par l'utilisateur, et l'acquisition de toutes les informations de type préenregistrées ; et l'affichage des informations de type préenregistrées pour que l'utilisateur les consulte ;
la réception d'une instruction de sélection de type d'article déclenchée par un utilisateur, et l'acquisition d'un cadre cible d'acquisition d'image correspondant à un type cible sélectionné par l'utilisateur ;
l'acquisition d'une image d'imagerie d'un article à identifier dans le cadre cible d'acquisition d'image ;
la réalisation d'une comparaison de caractéristiques sur l'image d'imagerie et des informations de caractéristiques préenregistrées dans une base de données prédéfinie, et la détermination, selon un résultat de comparaison, d'informations de caractéristiques préenregistrées cibles correspondant à l'image d'imagerie ; et
la détermination d'un code d'identification de l'article à identifier selon les informations de caractéristiques préenregistrées cibles.

2. Procédé d'identification d'article selon la revendication 1, selon lequel les informations de caractéristiques préenregistrées comprennent des séquences de paramètres de spécification préenregistrées de points caractéristiques d'échantillon d'article ;
la réalisation d'une comparaison de caractéristiques sur l'image d'imagerie et des informations de caractéristiques préenregistrées dans une base de données prédéfinie, et la détermination, selon un résultat de comparaison, d'informations de caractéristiques préenregistrées cibles correspondant à l'image d'imagerie comprennent :
l'identification de points caractéristiques d'imagerie dans l'image d'imagerie ;
l'acquisition de paramètres d'imagerie de chacun des points caractéristiques d'imagerie, et l'obtention d'une séquence de paramètres d'imagerie de points caractéristiques sur la base de chacun des paramètres d'imagerie ; et
le calcul de paramètres de distance entre la séquence de paramètres d'imagerie et chacune des séquences de paramètres de spécification préenregistrées, et la détermination d'une séquence de paramètres de spécification préenregistrée cible correspondant à l'image d'imagerie sur la base de chacun des paramètres de distance ; et
la détermination d'un code d'identification de l'article à identifier selon les informations de caractéristiques préenregistrées cibles comprend :
la détermination du code d'identification de l'article à identifier selon la séquence de paramètres de spécification préenregistrée cible.

3. Procédé d'identification d'article selon la revendication 2, selon lequel le calcul d'un paramètre de distance entre la séquence de paramètres d'imagerie et chacune des séquences de paramètres de spécification préenregistrées comprend :
la conversion de la séquence de paramètres d'imagerie en une séquence de paramètres d'imagerie standard selon un rapport fixé de l'imagerie à la spécification, sur la base d'un coefficient de conversion des paramètres d'imagerie et de paramètres de spécification réels ; et
le calcul d'une valeur de distance entre la séquence de paramètres d'imagerie standard et chacune des séquences de paramètres de spécification préenregistrées, et la prise de chaque valeur de distance comme le paramètre de distance entre la séquence de paramètres d'imagerie et chacune des séquences de paramètres de spécification préenregistrées.

4. Procédé d'identification d'article selon la revendication 2, selon lequel les séquences de paramètres de spécification préenregistrées sont des séquences obtenues en agençant des paramètres de spécification d'échantillons d'articles selon une règle ou un format prédéterminés.

5. Procédé d'identification d'article selon la revendication 2, selon lequel les informations de caractéristiques préenregistrées cibles sont une séquence de paramètres de spécification préenregistrée ayant le plus petit paramètre de distance ou une séquence de paramètres de spécification préenregistrée inférieure à un seuil de paramètre de distance prédéfini.

6. Procédé d'identification d'article selon la revendication 2, selon lequel les informations de caractéristiques préenregistrées sont un paramètre de niveaux de gris préenregistré de l'image d'échantillon d'article ; et
les informations de caractéristiques préenregistrées cibles sont un paramètre de niveaux de gris préenregistré cible, selon lequel le paramètre de niveaux de gris préenregistré cible est un paramètre de niveaux de gris ayant la plus grande similarité avec un paramètre de niveaux de gris à détecter parmi des paramètres de niveaux de gris préenregistrés.

7. Procédé d'identification d'article selon l'une quelconque des revendications 1 à 6, selon lequel l'acquisition d'une image d'imagerie d'un article à identifier dans le cadre cible d'acquisition d'image comprend :
l'acquisition, dans le cadre cible d'acquisition d'image, d'une image d'imagerie d'étalonnage de l'article à identifier correspondant géométriquement au cadre cible d'acquisition d'image ; et
la réalisation d'une comparaison de caractéristiques sur l'image d'imagerie et des informations de caractéristiques préenregistrées dans une base de données prédéfinie, et la détermination, selon un résultat de comparaison, d'informations de caractéristiques préenregistrées cibles correspondant à l'image d'imagerie comprennent :
la réalisation d'une comparaison de caractéristiques sur l'image d'imagerie d'étalonnage et les informations de caractéristiques préenregistrées dans la base de données prédéfinie, et la détermination, selon un résultat de comparaison, d'informations de caractéristiques préenregistrées cibles correspondant à l'image d'imagerie d'étalonnage.

8. Procédé d'identification d'article selon la revendication 7, selon lequel l'acquisition, dans le cadre cible d'acquisition d'image, d'une image d'imagerie d'étalonnage de l'article à identifier correspondant géométriquement au cadre cible d'acquisition d'image comprend :
l'acquisition d'une image d'imagerie en temps réel de l'article à identifier dans le cadre cible d'acquisition d'image ;
la comparaison de l'image d'imagerie en temps réel avec le cadre cible d'acquisition d'image, et la détermination d'une relation géométrique en temps réel entre l'image d'imagerie en temps réel et le cadre cible d'acquisition d'image ; et
le fait de juger si la relation géométrique en temps réel satisfait à une condition d'étalonnage prédéfinie, selon lequel,
dans l'affirmative, une image d'imagerie en temps réel actuelle est prise comme l'image d'imagerie d'étalonnage ; et,
dans la négative, des informations d'invite en temps réel pour ajuster une position d'un dispositif d'acquisition d'image sont affichées, pour que l'utilisateur ajuste la position du dispositif d'acquisition d'image sur la base des informations d'invite en temps réel.

9. Procédé d'identification d'article selon l'une quelconque des revendications 1 à 8, selon lequel l'article à identifier comprend une clé à identifier, et le code d'identification d'article comprend un code de profil de dents pour la clé.

10. Procédé d'identification d'article selon l'une quelconque des revendications 1 à 9, selon lequel les informations de caractéristiques préenregistrées sont des informations de caractéristiques préenregistrées sur une clé.

11. Dispositif d'identification d'article, dans lequel le dispositif d'identification d'article comprend : une mémoire, un processeur, et un programme d'identification d'article stocké sur la mémoire et exécutable sur le processeur, et le programme d'identification d'article, lorsqu'il est exécuté par le processeur, met en œuvre les étapes du procédé d'identification d'article selon l'une quelconque des revendications 1 à 10.

12. Support de stockage lisible par ordinateur, dans lequel le support de stockage lisible par ordinateur stocke un programme d'identification d'article qui, lorsqu'il est exécuté par un processeur, met en œuvre les étapes du procédé d'identification d'article selon l'une quelconque des revendications 1 à 10.
